# NEUE EUROPÄISCHE PATENTSCHRIFT

(11) **EP 0 370 121 B2**
(45) Veröffentlichungstag und Bekanntmachung des Hinweises auf die Entscheidung über den Einspruch: **11.06.1997**
(45) Hinweis auf die Patenterteilung: 15.05.1991
(21) Anmeldenummer: 88119355.1
(22) Anmeldetag: 21.11.1988
(51) Int. Cl.: B65G 1/137

(54) **Ausschieber für eine Kommissionieranlage**
Dispensing mechanism for retrieval system
Poussoir d'alimentation dans un entrepôt automatisé

(43) Veröffentlichungstag der Anmeldung: 30.05.1990
(73) Patentinhaber: WILTSCHE GMBH, D-83395 Freilassing (DE)
(72) Erfinder: Wiltsche, Norbert, Dipl.-Ing., D-8228 Freilassing (DE)
(74) Vertreter: Hanke, Hilmar

(56) Entgegenhaltungen:
- DE-A- 2 122 968
- DE-A- 2 226 769
- DE-A- 2 404 323
- DE-A- 3 311 412
- DE-A- 3 533 382
- FR-A- 2 183 943
- US-A- 2 128 594
- US-A- 2 857 040
- US-A- 3 442 401
- US-A- 3 530 972
- US-A- 3 819 087

## Beschreibung

Die Erfindung betrifft einen Ausschieber für eine Kommissionieranlage der im Patentanspruch 1 angegebenen Gattung.

Kommissionierautomaten dienen zum automatischen Zusammenstellen von Warensendungen aus einer großen Artikelvielfalt in einem Warenlager.

Das Schlüsselelement eines jeden Kommissionierautomaten ist der Ausschieber, der wegen der großen Artikelvielfalt einfach aufgebaut und extrem funktionssicher sein muß. Bekannte Ausschieber haben diverse Nachteile :
- Teuer durch Einzelantrieb
- Breite und hohe Bauweise
- Laut durch Verwendung von Ketten und Druckluft
- Synchronbetrieb nicht möglich wegen Einzelantrieb
- Geschwindigkeitsregelung teuer und kompliziert
- Energieversorgung aufwendig.

Aus DE-A-3 311 412 ist ein Ausschieber der eingangs genannten Art bekannt, bei dem das Zahnriemen-Förderband am Anfang und am Ende der Ausschiebestrecke über zwei im wesentlichen gleich ausgebildete Umlenkelemente geleitet wird. Der obere Förderband-Trum und der untere Förderband-Trum sind hier bei vergleichsweise weit voneinander beabstandet. Der große Abstand ist erforderlich, um das Förderband wirkungsvoll ohne größeren Schlupf anzutreiben und eventuell dazwischenliegende Übersetzungsantriebsräder anzuordnen. Durch den großen Abstand wird der Ausschieber jedoch vergleichsweise inkompakt. Er benötigt viel Einbauraum in einem Magazin der Kommissionieranlage, so daß er nur für große Kommissionieranlagen geeignet ist für hohe Artikelsäulen, die sich praktisch über die gesamte Magazinhöhe erstrecken, d.h. für zu kommissionierende Artikel, deren Umsatz groß ist. Wird die vorhandene Magazinhöhe für einen selten verlangten Artikel eingerichtet, ergibt sich ein schlechter Nutzungsgrad der Nachfüllfassade.

Aufgabe der Erfindung ist die Schaffung eines Ausschiebers der eingangs genannten Art, der nicht nur einfach aufgebaut und extrem funktionssicher im Betrieb ist, sondern insbesondere durch seine kompakte Bauweise mit Hilfe einfacher Mittel wirkungsvoll in Kommissionieranlagen unterschiedlichster Größenordnungen und Zweckbestimmungen eingesetzt werden kann.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der abhängigen Ansprüche.

Wesen der Erfindung ist mithin ein zahnriemengetriebenes Förderband mit voneinander beabstandeten Ausschiebernocken entsprechend der durchschnittlichen Länge von Kommissionierartikeln, vorzugsweise drei Ausschiebernocken. Das Förderband wird durch ein Zahnrad besonderer Konfiguration angetrieben, dessen Umlenkradius größer ist als der Umlenkradius der nichtangetriebenen Umlenkrolle oder Umlenkschiene des Förderbandes auf der anderen Seite. Hierbei umschließt das Förderband das angetriebene Zahnrad mit einem Umschlingungswinkel, der größer ist als 180° und vorzugsweise ca. 270° beträgt. Der große Umschlingungswinkel wird eingerichtet durch eine weitere Umlenkrolle oder - schiene, die auf der Unterseite dem angetriebenen Zahnrad dicht beabstandet an ortsfester Stelle zugeordnet ist. Der große Umschlingungswinkel ermöglicht zum einen eine große Zahneingriffsfläche auf der Antriebsseite, so daß der Zahnriemen auch mit einem einfachen Rillen- oder Rippenprofil ausgebildet sein kann und das Förderband insgesamt verschleißunempfindlich ist. Zum anderen ergibt sich der entscheidende Vorteil einer in der Höhe schmalen Bauweise eines Ausschiebers im kritischen Bereich zwischen den einzelnen übereinanderliegenden Artikelsäulen eines Kommissionierregals. Durch den Einsatz eines schmalen und niedrigen Ausschiebers lassen sich übereinander bis zu sechs verschiedene Artikel in Artikelsäulen anordnen, und es können die Artikel seitlich bis auf einen Trennsteg ganz aneinandergerückt werden. Der Flächenbedarf pro Artikel liegt in der Praxis bei ca. 0,014 m², wenn nicht der Umsatz eine größere Magazinkapazität erfordert. Beim Stand der Technik, bei dem pro Kommissionierregal unterseitig nur ein einziger Ausschieber vorgesehen ist, ergibt sich eine schlechte Nutzung der Nachfüllfassade, die bei unter 50% liegt. Durch die Erfindung kann also die Magazinhöhe für jeden Artikel in kleinen Abstufungen gewählt werden mit Rücksicht auf den Umsatz des Artikels und auf das Verhältnis von Eigengewicht zur Festigkeit der Verpackung. Dieses Verhältnis darf ein gewisses Maß nicht überschreiten, damit der zuunterst liegende Artikel von der darüberliegenden Artikelsäule nicht erdrückt wird.

In vorteilhafter Ausgestaltung der Erfindung ist das angetriebene Zahnrad, das etwas tiefer liegt als die nichtangetriebene Umlenkrolle oder Umlenkschiene des Förderbands, auf der Ausschieberseite des Artikels gelegen, d.h. auf der Rückseite des Kommissionierregals, welches von der Vorderseite mit Kommissionierartikeln bestückt werden kann. Unter dem angetriebenen Zahnrad befindet sich ein in Eingriff stehendes Ritzel, das auf einer zentralen im wesentlichen horizontalen Antriebswelle befestigt ist, die ihrerseits an einen zentralen Antrieb angeschlossen ist und eine Länge entsprechend der Länge des gesamten Kommissionierlagers aufweist. Der gesamte Antrieb befindet sich somit auf der Rückseite eines Kommissionierregals. Stehen mehrere in Reihe angeordnete Kommissionierregale Rücken an Rücken, befindet sich der Antrieb im Zwischenraum an einer Stelle, die nicht stört, da die Vorderseiten der Regale für eine Nachfüllung von Artikeln frei zugänglich sind.

Insbesondere ist ein kontinuierlich angetriebenes Ritzel vorgesehen, das mit einem ersten Zahnkranz des angetriebenen Zahnrads kämmt, der über eine Kupplung mit einem zweiten, mit dem inneren Zahnriemen des Förderbands in Eingriff stehenden Zahnkranz des angetriebenen Zahnrads antreibend verbunden ist. Die Kupplung ist zweckmäßigerweise durch einen Elektromagneten betätigbar, der entsprechend gesteuert ist. Von Vorteil ist, daß der zentrale Antrieb eine einfache Anpassung der Geschwindigkeit des Förderbandes und den Einsatz einer einfachen robusten Steuerung erlaubt.

Durch den Einsatz eines zentralen Antriebs, Synchronisierung der Steuerung und Kompaktbauweise lassen sich die Fertigungskosten einer Kommissionieranlage auf etwa die Hälfte senken. Ein Synchronbetrieb ist insbesondere dann von Vorteil, wenn bei einer einzigen Artikelsäule zwei oder mehrere Ausschieber zum Auswerfen beispielsweise eines breiten Produkts gefordert sind. Der Synchronbetrieb gewährleistet, daß sämtliche Ausschiebernocken genau gleichzeitig und in einer Linie nach vorn bewegt werden. Die niedrigen Fertigungskosten eines einzelnen Ausschiebers rechtfertigen zumeist auch den Einsatz von zwei oder mehreren Ausschiebern für ein einziges Produkt. Die Ausschiebernocken sind vorzugsweise so konstruiert, daß sie bei einem Erstanschlag an den auszuschiebenden Artikel einer Dämpfung unterliegen, den Artikel also nicht ruckartig beschleunigen.

Der Ausschieber wird durch eine spezielle Magnetkupplung eingeschaltet, deren Elektromagnet zwischen den beiden Förderbandabschnitten liegt und deren mechanischer Schaltteil praktisch im angetriebenen Zahnrad sehr kompakt platzsparend integriert ist und letztlich zu der sehr schmalen Bauweise des Ausschiebers führt, während die geringe Höhe des Ausschiebers durch den großen Umschlingungswinkel beim angetriebenen Zahnrad realisiert ist.

Durch die Erfindung lassen sich die eingangs aufgelisteten Nachteile bekannter Ausschieber beseitigen.

Die Erfindung wird nachfolgend anhand eines Ausführungsbeispiels unter Bezugnahme auf beigefügte Zeichnung näher erläutert ; es zeigen :
Fig. 1 einen schematischen Vertikalschnitt durch einen Ausschieber, dem oberseitig eine Artikelsäule zugeordnet ist und sich unterseitig eine weitere Artikelsäule anschließt,
Fig. 2 einen schematischen Querschnitt durch den Antrieb des Ausschiebers nach Fig. 1,
Fig. 3 einen Axialschnitt durch das angetriebene mehrteilige Zahnrad des Ausschieberantriebs nach den Fig. 1 und 2 in der Schnittebene einer Schaltklinke einer Magnetkupplung,
Fig. 4 eine Schaltkurve einschließlich Elektromagnet in einer Ansicht entsprechend der Fig. 1 und 3, und
Fig. 5 bis 8 Schaltkurve, Schaltklinke und Nachlaufsperre des angetriebenen Zahnrads des Ausschieberantriebs in aufeinanderfolgenden Schaltstellungen der Magnetkupplung.

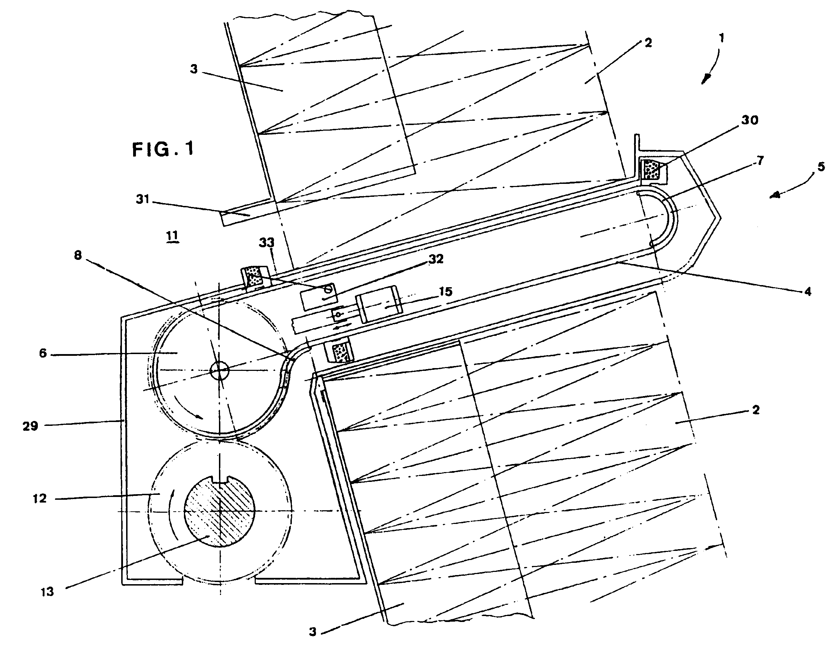

Gemäß Zeichnung umfaßt eine Kommissionieranlage 1 zur automatischen Kommissionierung und Versandbereitstellung von in Artikelsäulen 2 gelagerten Kommissionierartikeln in einem Kommissionierregal 3 Ausschieber 5, von denen einer in Fig. 1 dargestellt ist.

Der Ausschieber 5 besitzt insbesondere ein zahnriemengetriebenes Förderband 4, welches außenseitig voneinander gleich beabstandete Ausschiebernocken 30 aufweist. Das Förderband 4 ist durch ein Zahnrad 6 gemäß Fig. 1 im Gegenuhrzeigersinn angetrieben, welches seinerseits mit einem tiefergelegenen Ritzel 12 kämmt, das auf einer langgestreckten gemeinsamen Antriebswelle 13 an entsprechender Stelle befestigt ist. Die Antriebswelle 13 ist durch einen (nicht veranschaulichten) zentralen Antrieb angetrieben, beispielsweise durch einen Elektromotor, der mithin alle einzelnen Ausschieber einer Kommissionieranlage 1 antreibt, wobei das Drehmoment in einem nicht veranschaulichten Verteilergetriebe auch auf mehrere langgestreckte Antriebswellen aufgeteilt werden kann, sofern dies die Konzeption einer größeren Kommissionieranlage 1 vorsieht. Der gemeinsame Antrieb treibt auch nicht gezeigte Sammelförderbänder an, die die ausgeschobenen kommissionierten Artikel zu einer Versandbereitstellung transportieren, was hier nicht näher interessiert. Die Arbeitsgeschwindigkeit des zentralen Antriebs kann mit einem Frequenzumformer eingestellt werden.

Jeder einzelne Ausschieber 5 umfaßt mithin ein Zahnriemen-Förderband 4 mit vorzugsweise drei Ausschiebernocken 30, die ein Dämpfungsstück aufweisen, um einen gedämpften Erstanschlag an einen auszuschiebenden Artikel an der untersten Stelle einer Artikelsäule 2 einzurichten. Das Förderband 4 besitzt insbesondere ein mit dem Zahnriemen des Förderbands 4 kämmendes angetriebenes Zahnrad 6, das deutlich größer ist als die andere nichtangetriebene Förderband-Umlenkrolle oder -schiene 7, wobei dem angetriebenen Zahnrad 6 unterseitig eine weitere Umlenkrolle oder -schiene 8 zugeordnet ist, durch die beim angetriebenen Zahnrad 6 ein Förderband-Umschlingungswinkel von nahezu 270° eingerichtet wird.

Der obere Förderbandtrum 9 verläuft parallel zum unteren Förderbandtrum 10, und es ist dem Parallelabschnitt des Förderbandes 4 oberseitig die Artikelsäule 2 des Kommissionierregals 3 zugeordnet.

Ersichtlich sind oberer und unterer Förderbandtrum 9, 10 vergleichsweise dicht voneinander beabstandet, so daß eine geringe Bauhöhe im kritischen Bereich eines Kommissionierregals eingerichtet wird. Dadurch können bei einem einzigen vertikalen, etwas schräg angeordneten Kommissionierregals Ausschieber in verschiedenen Ausschieberebenen platzsparend angeordnet werden, nicht nur an unterster Stelle, wie dies beim Stand der Technik möglich ist. Die Magazinhöhe kann bei der Erfindung für jeden Artikel in kleinen Abstufungen gewählt werden mit Rücksicht auf den Umsatz des Artikels und auf das Verhältnis von Eigengewicht zu Festigkeit der Verpackung. Dieses Verhältnis darf ein gewisses Maß nicht überschreiten, damit der zuunterst liegende Artikel von der darüberliegenden Artikelsäule nicht erdrückt wird.

Zwischen oberem und unterem Förderbandtrum 9, 10 befindet sich ein Elektromagnet 15, der eine nachfolgend noch näher beschriebene plattige Schaltkurve 16 einer Magnetkupplung betätigt, die in kompakter Bauweise im angetriebenen Zahnrad 6 angeordnet ist.

Der Ausschieber 5 befindet sich insgesamt in einem Gehäuse 29, in welchem insbesondere das durch die Antriebswelle 13 angetriebene Ritzel 12, das angetriebene Zahnrad 6, das Förderband 4, die Umlenkrollen oder -schienen 7, 8 sowie der Elektromagnet 15 angeordnet sind. Das Gehäuse 29 weist insbesondere im Bereich der Oberseite des oberen Förderbandtrums 9 eine Aussparung auf, durch die die Ausschiebernocken 30 bei einer Drehung in einen Eingriff mit einem auszuschiebenden Artikel gelangen können.

An der Rückseite 11 des Kommissionierregals 3, an welcher sich insgesamt der Antrieb des Ausschiebers 5 befindet, ist ferner ein Niederhalter 31 vorgesehen, der bei einem Ausschieben eines kommissionierten Artikels letzteren definiert einem Förderband zuführt.

Im oder am Gehäuse ist ferner ein Zählschalter 32 vorgesehen, dessen federnde Zunge 33 bei einem Ausschieben eines Artikels niedergedrückt wird und dadurch den Zählschalter 32 um einen Zählschritt betätigt.

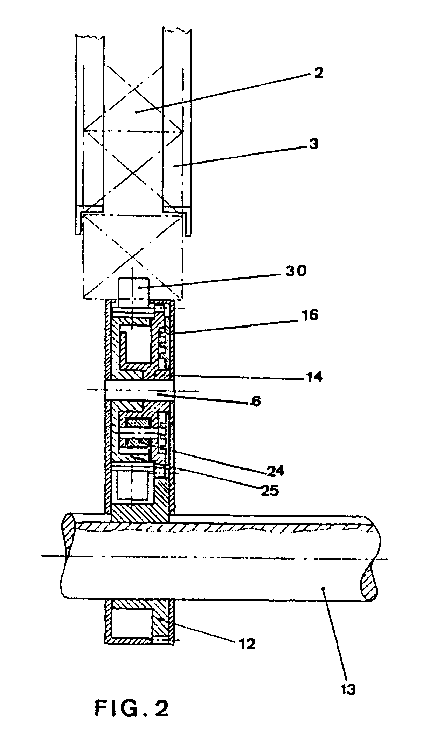

Das angetriebene Zahnrad 6 ist insbesondere entsprechend den Fig. 2 bis 8 aufgebaut und in einer kompakten sehr schmalen Bauweise ausgeführt, wie dies insbesondere der Fig. 2 zu entnehmen ist. Aufgrund der sehr schmalen Bauweise des angetriebenen Zahnrads 6 können insgesamt auch sehr schmale Ausschieber 5 realisiert werden, die nicht nur einfach in der Fertigung und sehr zuverlässig im Betrieb sind, sondern auch bei sehr schmalen Kommissionierartikeln eingesetzt werden können. Sind breitere Artikel bzw. Artikelsäulen 2 vorgegeben, so können für eine einzige Artikelsäule zwei oder mehrere Ausschieber nebeneinander angeordnet werden, die synchron gesteuert sind.

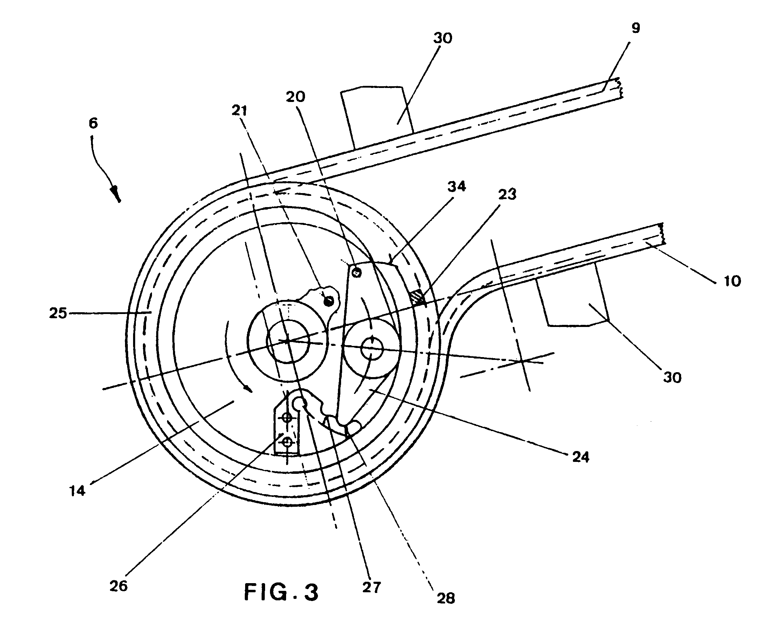

Das angetriebene Zahnrad 6 umfaßt einen ersten Zahnkranz 14, welcher mit dem angetriebenen Ritzel 12 kämmt. Ferner umfaßt das angetriebene Zahnrad 6 einen zweiten Zahnkranz 25, der mit dem Zahnriemen des Förderbandes 4 kämmt. Beide Zahnkränze 14, 25 sind über ein Kupplungsteil miteinander verbunden, der durch den Elektromagnet 15 geschaltet werden kann. Insbesondere umfaßt die Kupplung eine am ersten Zahnkranz 14 schwenkbar angelenkte Schaltklinke 24, wie dies in größerer Einzelheit in Fig. 3 dargestellt ist. Der Schaltklinke 24 ist eine gleichermaßen am ersten Zahnkranz 14 befestigte Federrast 26 zugeordnet, welche zwei Raststellungen 27, 28 besitzt, durch welche die Schaltklinke in der gerade geschalteten Stellung (Kupplung ein bzw. Kupplung aus) gehalten wird, sofern nicht gerade der Schaltvorgang durchgeführt wird. Die Schaltklinke 24 der Fig.3 befindet sich in der Schaltstellung Kupplung aus. In der Schaltstellung Kupplung ein bewegt sich die Schaltklinke 24 gemäß Fig. 3 im Uhrzeigersinn und befindet sich dann in einem Eingriff mit dem Riegelabschnitt 34 des zweiten Zahnkranzes 25, der mit dem Zahnriemen des Förderbands 6 in Eingriff steht.

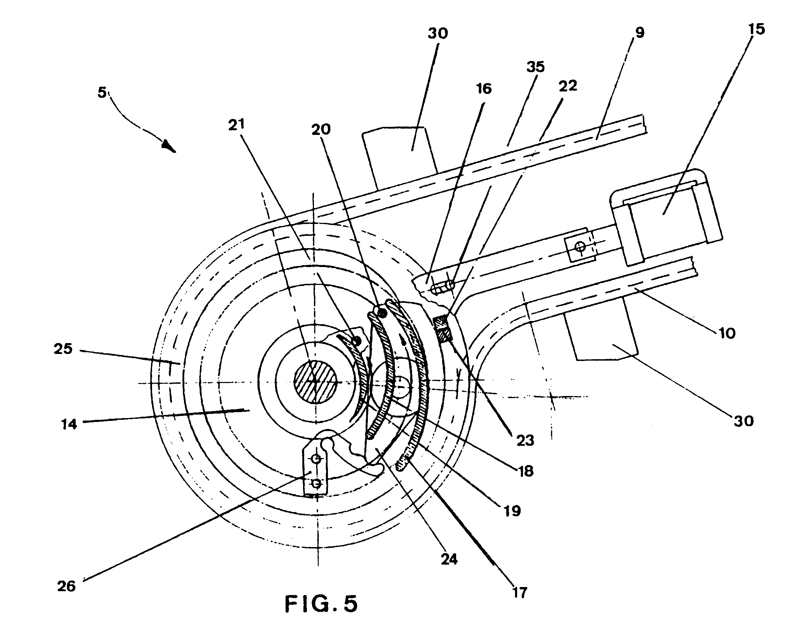

Betätigt wird die Schaltklinke durch ihren Schaltzapfen 20, der bei einer Drehung des ersten Zahnkranzes 14 im Uhrzeigersinn gegen eine Einschaltkurve 18 oder gegen eine Ausschaltkurve 17 der plattigen Schaltkurve 16 läuft, wie dies insbesondere in den Fig. 5 bis 8 gezeigt ist. Die plattige Schaltkurve 16 umfaßt ferner eine Gegenkurve 19, welche in einen Eingriff mit einem Gegenstift 21 gelangen kann, der - ähnlich dem Schaltzapfen 20 auf der Schaltklinke 24 - an radial innerer Stelle am ersten Zahnkranz 14 angeordnet ist.

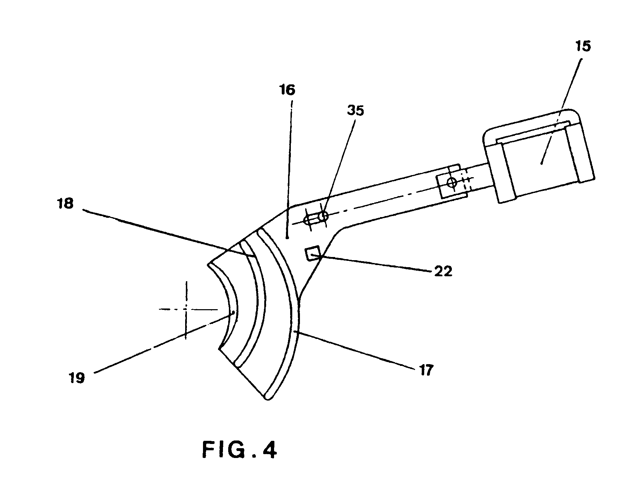

Die plattige Schaltkurve 16 weist insbesondere voneinander beabstandete sichelförmige Einzelkurven 17, 18, 19 auf, die in einer Draufsicht gemäß Fig. 4 in etwa in einem Sektorbereich des angetriebenen Zahnrads 6 von ca. 90° liegen. Hierbei sind die Einzelkurven 17, 18 und 19 endseitig unterschiedlich voneinander beabstandet und rampenartig ausgebildet.

Nachfolgend wird das Schaltspiel der plattigen Schaltkurve 16 gemäß den Fig. 5 bis 8 beschrieben.

In Fig. 5 befindet sich die Schaltklinke 24 in der in Fig.3 gezeigten Stellung, d.h. in der Schaltstellung Kupplung aus. Gleichzeitig befindet sich die plattige Schaltkurve 16 in ihrer gemäß Fig. 5 linken Endstellung, d.h. in der Schaltkurvenstellung aus. In der in Fig. 5 gezeigten Stellung des angetriebenen Zahnrades 6 kann sich mithin im Normalfall zwar die zentrale Antriebswelle 13 drehen, der Ausschieber wird jedoch nicht mitgenommen. Es dreht sich nur der innere Teil der Magnetkupplung, d.h. der erste Zahnkranz 14, auf dem sich die Schaltklinke 24 befindet. Der zweite Zahnkranz 25, der mit dem Zahnriemen des Förderbandes 4 in Eingriff steht, kann sich auch durch die Reibung nicht mitdrehen, weil dieser durch eine Nachlaufsperre in seiner Stellung festgehalten wird, insbesondere durch einen Anschlag 22 auf der plattigen Schaltkurve 16, gegen den der Stoppstift 23 eingreift, der sich auf dem zweiten Zahnkranz 25 befindet.

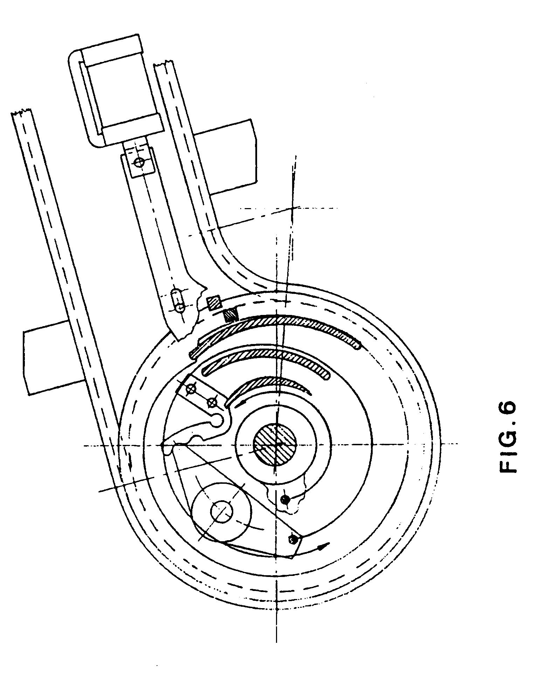

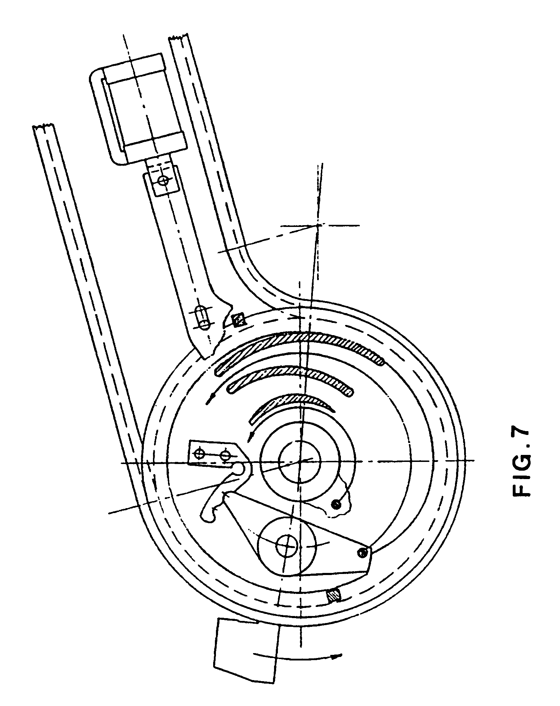

Sowie der Gegenstift 21 bei einer Drehung des ersten Zahnkranzes 14 im Gegen-Uhrzeigersinn aus einem Eingriff von der Außenseite der Gegenkurve 19 gelangt, kann durch Betätigung des Elektromagneten 15 die Schaltkurvenstellung "ein" gemäß Fig. 6 eingestellt werden. Dadurch wird zum einen die Nachlaufsperre 22, 23 gelöst und gleichzeitig sämtliche Einzelkurven 17, 18 und 19 der plattigen Schaltkurve 16 geringfügig gemäß Fig. 6 nach rechts verschoben. Die Endstellung wird durch den Führungsstift 35 festgelegt. In dieser Schaltkurvenstellung kann nun bei einer Drehung des ersten Zahnkranzes 14 der Gegenstift 21 in einen Eingriff mit der radialen Innenseite der Gegenkurve 19 der plattigen Schaltkurve 16 gelangen. Gleichzeitig bewegt sich der Schaltzapfen 20 der Schaltklinke 24 in einen Eingriff der radialen Außenseite der mittleren Einschaltkurve 18, deren oberseitiges Austrittsende radial weiter entfernt ist vom Zentrum des angetriebenen Zahnrades 6 als das unterseitige Eintrittsende. Der Schaltzapfen 20 wird mithin rampenartig radial nach außen bewegt, und es gelangt die Schaltklinke 24 im Bereich des Schaltzapfens 20 radial nach außen und mithin in einen Eingriff mit dem Riegelbereich 34 des zweiten Zahnkranzes 25. Ein verschleißminderndes Dämpfungsglied oder ein federndes Nachgebeelement kann zwischengeschaltet sein. Die Schaltklinke 24 nimmt mithin die in Fig. 6 und 7 gezeigte Verriegelungsstellung ein. Dadurch, daß der Gegenstift 21 auf der radial inneren Seite der Gegenkurve 19 eingreifend vorbeigeleitet wird, verhindert, daß der schwache Schaltmagnet durch die Massenträgheit der Schaltklinke und durch die Haltekraft der Federrast 26 in seine ursprüngliche Stellung zurückgezogen wird.

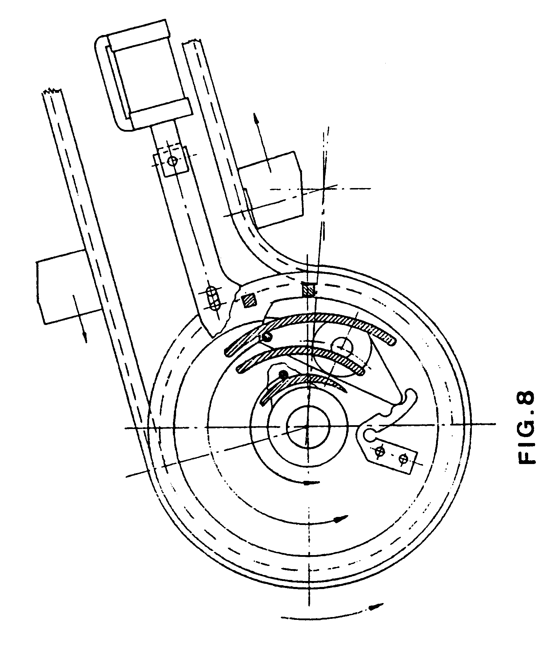

Das Ausrücken der Kupplung erfolgt analog gemäß Fig. 8.

Hat der Gegenstift 21 die radiale Innenseite der Gegenkurve 19 verlassen, kann die plattige Schaltkurve 16 in die in Fig. 8 gezeigte Stellung geschoben werden, in der sich die Einzelkurven 17, 18 und 19 näher am Zentrum des angetriebenen Zahnrads 6 befinden (und die Nachlaufsperre 22, 23 wieder in Betrieb genommen worden ist). Der Schaltzapfen 20 gelangt gegen die radiale Innenseite der Ausschaltkurve 17. Da das obere Ende der Ausschaltkurve 17 radial näher zum Zentrum des angetriebenen Zahnrads 6 gelegen ist als das untere Ende der Ausschaltkurve 17, erfährt die Schaltklinke 24 bezüglich des ersten Zahnkranzes 14 eine Schwenkbewegung im Gegenuhrzeigersinn, so daß die Schaltklinke 24 aus einem Eingriff des Riegelbereichs 34 des zweiten Zahnkranzes 25 gelangt. Die Schaltklinke 24 nimmt letztlich wieder die in Fig. 5 gezeigte Ausgangsstellung ein. Dadurch, daß der Gegenstift 21 bei einem Schalten der Schaltklinke in ihre Lösestellung auf der radialen Außenseite der Gegenkurve 19 eingreifend geführt ist, verhindert, daß der schwache Schaltmagnet durch die Massenträgheit der Schaltklinke und durch die Haltekraft der Federrast in seine ursprüngliche Stellung zurückgezogen wird.

Ersichtlich kann das Bewegen der Schaltkurve 16 durch den Magneten immer nur dann erfolgen, wenn sich der umlaufende Gegenstift 21 nicht im Sektor der Gegenkurve 19 befindet. Dies bedeutet, daß der Magnet schon im Bereich 90 bis 360° vorher umgeschaltet werden muß, bevor die Schaltklinke 24 ein- oder ausrastet.

Da die Steuerung synchron mit der Winkelstellung der Kupplung erfolgen muß, kann auf einen Winkelschrittgeber nicht verzichtet werden. Da jedoch nur ein einziger Antrieb verwendet wird, ist der Aufwand vernachlässigbar klein.

## Patentansprüche

1. Ausschieber für eine Kommissionieranlage (1), insbesondere zur automatischen Kommissionierung und Versandbereitstellung von in Artikelsäulen (2) gelagerten Kommissionierartikeln, mit einem einen Ausschiebernocken (30) aufweisenden Zahnriemen-Förderband (4), dessen Ausschiebestrecke von zwei Umlenkelementen (6, 7) begrenzt wird, wobei das eine Umlenkelement ein mit dem Zahnriemen kämmendes angetriebenes Zahnrad (6) ist und der obere Förderbandtrum (9) parallel zum unteren Förderbandtrum (10) verläuft, dadurch gekennzeichnet, daß der Umlenkradius des angetriebenen Zahnrades (6) größer ist als der Umlenkradius des anderen nichtangetriebenen Umlenkelements, das als Förderband-Umlenkrolle oder -schiene (7) ausgebildet ist, wobei dem angetriebenen Zahnrad (6) unterseitig eine weitere Förderband-Umlenkrolle oder -schiene (8) zugeordnet ist, durch die ein Förderband-Umschlingungswinkel beim angetriebenen Zahnrad (6) von mehr als 180°, vorzugsweise ca. 270°, eingerichtet wird, wobei bei dem Ausschieber im angeordneten Zustand in der Kommissionieranlage ausschließlich dem Parallelabschnitt des Förderbandes (4) oberseitig eine Artikelsäule (2) eines Kommissionierregals (3) zugeordnet ist und unterseitig sich eine weitere Artikelsäule (2) eines benachbarten Kommissionierregals (3) anschließt.

2. Ausschieber nach einem der Anspruch 1, dadurch gekennzeichnet, daß das angetriebene Zahnrad (6) unterseitig mit einem Ritzel (12) kämmt, das auf einer zentralen im wesentlichen horizontalen Antriebswelle (13) befestigt ist, die ihrerseits an einem zentralen Antrieb angeschlossen ist und eine Länge entsprechend der Länge des gesamten Kommissionierlagers besitzt.

3. Ausschieber nach Anspruche 1 oder 2, dadurch gekennzeichnet, daß ein kontinuierlich angetriebenes Ritzel (12) vorgesehen ist, das mit einem ersten Zahnkranz (14) des angetriebenen Zahnrads (6) kämmt, der über eine Kupplung mit einem zweiten, mit dem inneren Zahnriemen des Förderbands in Eingriff stehenden Zahnkranz (25) des angetriebenen Zahnrads (6) antreibend verbunden ist.

4. Ausschieber nach Anspruch 3, dadurch gekennzeichnet, daß die Kupplung durch einen Elektromagnet (15) betätigbar ist, der vorzugsweise zwischen oberem und unterem Förderbandtrum (9 bzw. 10) liegt.

5. Ausschieber nach Anspruch 3 oder 4, dadurch gekennzeichnet, daß die Kupplung eine mit dem Elektromagnet (15) verbundene verschiebliche oder verschwenkbare plattige Schaltkurve (16) mit Einzelkurven bzw. Schaltrampen (Einschaltkurve 18, Ausschaltkurve 17) besitzt, welche mit einem Schaltzapfen (20) einer am ersten Zahnkranz (14) befestigten Schaltklinke (24) in Eingriff bring bar sind, welche ihrerseits mit dem zweiten Zahnkranz (25) verriegelbar bzw. entriegelbar ist, wobei die plattige Schaltkurve (16) eine weitere Gegenkurve oder -rampe (19) aufweisen kann, die mit einem zugehörigen Gegenstift (21) des ersten Zahnkranzes (14) in Eingriff bringbar ist.

6. Ausschieber nach Anspruch 5, dadurch gekennzeichnet, daß die Schaltklinke (24) eine am ersten Zahnkranz (14) befestigte Federrast (26) mit zwei Raststellungen (27, 28) (Kupplung ein/Kupplung aus) aufweist.

7. Ausschieber nach einem der Ansprüche 3 bis 6, dadurch gekennzeichnet, daß der zweite Zahnkranz (25) eine Nachlaufsperre (22, 23) aufweist.

8. Ausschieber nach einem der Ansprüche 3 - 7, dadurch gekennzeichnet, daß erster und zweiter Zahnkranz (14, 25), plattige Schaltkurve (16), Schaltklinke (24), Federrast (26) sowie Schaltzapfen (20) und Gegenstift (21) in einer integrierten kompakten schmalen Bauweise mit einer Breite entsprechend praktisch der Förderbandbreite ausgebildet sind.

9. Ausschieber nach einem der Ansprüche 2 bis 8, dadurch gekennzeichnet, daß Ritzel (12), angetriebenes Zahnrad (6), Umlenkrollen oder -schienen (7, 8) und Förderband (4) in einem gemeinsamen Gehäuse (29) aufgenommen sind, das im Bereich des oberen Förderbandtrums (9) zur darüber befindlichen Artikelsäule (2) hin eine Aussparung besitzt.

## Claims

1. Dispenser (5) for a consignment unit (1), in particular for automatically consigning and preparing for dispatch consignment articles which are stored in article columns (2), with a toothed belt band conveyor (4), which comprises a dispensing cam (30) and the dispensing extent of which is defined by two deflection members (6, 7), one deflection member being a driven toothed wheel (6), which meshes with the toothed belt, wherein the upper band conveyor half (9) extends parallel to the lower band conveyor half (10) of the band conveyor (4), characterised in that the deflection radius of the driven toothed wheel (6) is greater than the deflection radius of the other, non-driven deflection member, which is formed as a band conveyor deflection pulley or rail (7), a further band conveyor deflection pulley or rail (8) being associated with the driven toothed wheel (6) at the underside, by means of which pulley or rail a band conveyor angle of contact at the driven toothed wheel (6) of more than 180°, preferably approximately 270°, is established, and, with a dispenser assembled in a consignment unit, an article column (2) of a consignment rack (3) is associated only with the parallel section of the band conveyor (4) at the upper side and a further article column (2) of an adjacent consignment rack (3) lies contiguous at the underside.

2. Dispenser according to claim 1, characterised in that the driven toothed wheel (6) meshes at the underside with a pinion (12), which is secured to a central, essentially horizontal drive shaft (13), which in turn is connected to a central drive and is of a length which corresponds to that of the overall consignment stock.

3. Dispenser according to claim 1 or 2, characterised in that a continuously driven pinion (12) is provided which meshes with a first toothed ring (14) of the driven toothed wheel (6), which ring is connected in a driving manner via a coupling to a second toothed ring (25), which is in engagement with the inner toothed belt of the band conveyor, of the driven toothed wheel (6).

4. Dispenser according to claim 3, characterised in that the coupling can be operated by an electromagnet (15), which preferably lies between the upper and the lower band conveyor half (9 and 10, respectively).

5. Dispenser according to claim 3 or 4, characterised in that the coupling comprises a displaceable or pivotable laminated trip cam (16), which is connected to the electromagnet (15) and has individual cams or trip ramps (engagement cam 18, disengagement cam 17), which can be brought into engagement with a trip pin (20) of a pawl (24), which is secured to the first toothed ring (14) and which in turn can be interlocked with and released from the second toothed ring (25), and the laminated trip cam (16) may have a further counter-cam or counter-ramp (19), which can be brought into engagement with an associated counter-pin (21) of the first toothed ring (14).

6. Dispenser according to claim 5, characterised in that the pawl (24) comprises a spring catch (26), which is secured to the first toothed ring (14) and has two lock-in positions (27, 28) (coupling engaged/coupling disengaged).

7. Dispenser according to one of claims 3 to 6, characterised in that the second toothed ring (25) comprises a follow-up lock (22, 23).

8. Dispenser according to one of claims 3 to 7, characterised in that the first and the second toothed ring (14, 25), the laminated trip cam (16), the pawl (24), the spring catch (26), the trip pin (20) and the counter-pin (21) are formed as an integrated, compact and narrow construction whose width practically corresponds to that of the band conveyor.

9. Dispenser according to one of claims 2 to 8, characterised in that the pinion (12), the driven toothed wheel (6), the deflection pulley or rail (7, 8) and the band conveyor (4) are accommodated in a common housing (29), which comprises a recess in the area of the upper band conveyor half (9) towards the article column (2) disposed above the latter.

## Revendications

1. Poussoir (5) pour une installation de préparation de commandes (1), en particulier pour les préparation de commandes et préparation d'expédition automatiques d'articles préparés pour des commandes et chargés dans des colonnes d'articles (2), comportant une bande transporteuse à courroie dentée (4) qui présente une saillie de poussoir (30) et dont le trajet de poussée est limité par deux éléments de renvoi (6, 7), un élément de renvoi étant une roue dentée entraînée (6) entrant en prise avec la courroie dentée, le brin supérieur de bande transporteuse (9) s'étendant parallèlement au brin inférieur (10) de la bande transporteuse (4), caractérisé en ce que le rayon de renvoi de la roue dentée entraînée (6) est supérieur au rayon de renvoi de l'autre élément de renvoi non entraîné qui est réalisé sous une forme de rouleau ou barre de renvoi (7) de bande transporteuse, à la roue dentée entraînée (6) étant adjoint du côté inférieur un autre rouleau ou barre de renvoi (8) de bande transporteuse par lequel un angle de contact de bande transporteuse pour la roue dentée entraînée (6) est réglé à plus de 180°, de préférence à approximativement 270°, et, avec un poussoir étant arrangé dans une installation de préparation de commandes, seulement à la section parallèle de la bande transporteuse (4), du côté supérieur, étant adjointe une colonne d'articles (2) d'un rayon de préparation de commandes (3) et, du côté inférieur, se raccordant une autre colonne d'articles (2) d'un rayon de préparation de commandes (3) voisin.

2. Poussoir suivant la revendication 1, caractérisé en ce que la roue dentée entraînée (6) est en prise du côté inférieur avec un pignon (12) qui est fixé sur un arbre d'entraînement central (13) sensiblement horizontal qui est raccordé pour sa part à un dispositif d'entraînement central et qui a une longueur correspondant à la longueur de la totalité de l'installation de préparation de commandes.

3. Poussoir suivant l'une ou l'autre des revendications 1 et 2, caractérisé en ce qu'il est prévu un pignon entraîné continûment (12) qui est en prise avec une première couronne dentée (14), de la roue dentée entraînée (6), reliée de façon à entraîner, par l'intermédiaire d'un accouplement, à une seconde couronne dentée (25), de la roue dentée entraînée (6), qui est en prise avec la courroie dentée interne de la bande transporteuse.

4. Poussoir suivant la revendication 3, caractérisé en ce que l'accouplement peut être actionné par un électroaimant (15) qui est situé de préférence entre les brins supérieur et inférieur de bande transporteuse (9 et respectivement 10).

5. Poussoir suivant l'une ou l'autre des revendications 3 et 4, caractérisé en ce que l'accouplement comporte une came plate de manoeuvre (16), mobile ou orientable, reliée à l'électroaimant (15) et comprenant des bossages individuels ou rampes de manoeuvre (bossage de marche 18, bossage d'arrêt 17) qui peuvent être mis en prise avec un téton de manoeuvre (20) d'un levier à cliquet (24) qui est fixé à la première couronne dentée (14) et qui, de son côté, peut être bloqué sur ou débloqué de la seconde couronne dentée (25), la came plate de manoeuvre (16) pouvant présenter un autre bossage ou rampe opposé (19) qui peut être mis en prise avec une broche opposée correspondante (21) de la première couronne dentée (4).

6. Poussoir suivant la revendication 5, caractérisé en ce que le levier à cliquet (24) présente un arrêt à ressort (26) fixé à la première couronne dentée (14) et comportant deux positions d'arrêt (27, 28) (accouplement en service/accouplement hors service).

7. Poussoir suivant l'une quelconque des revendications 3 à 6, caractérisé en ce que la seconde couronne dentée (25) présente une butée de fonctionnement par inertie (22, 23).

8. Poussoir suivant l'une quelconque des revendications 3 à 7, caractérisé en ce que les première et seconde couronnes dentées (14, 25), la came plate de manoeuvre (16), le levier à cliquet (24), l'arrêt à ressort (26) ainsi que les téton de manoeuvre (20) et broche opposée (21) sont réalisés en un genre de construction étroit, compact, intégré, d'une largeur correspondant pratiquement à la largeur de bande transporteuse.

9. Poussoir suivant l'une quelconque des revendications 2 à 8, caractérisé en ce que le pignon (12), la roue dentée entraînée (6), le rouleau ou barre de renvoi (7, 8) et la bande transporteuse (4) sont repris dans un boîtier commun (29) qui comporte dans la zone du brin supérieur de bande transporteuse (9) un évidement pour les colonnes d'articles (2) qui se trouvent au-dessus.
